# EUROPEAN PATENT SPECIFICATION

(11) **EP 1 447 034 B1**
(45) Date of publication and mention of the grant of the patent: **07.06.2006**
(21) Application number: 04001915.0
(22) Date of filing: 29.01.2004
(51) Int. Cl.: A47J 31/40

(54) **Capsule magazine unit having a holding device for the capsule magazine unit, in particular of an espresso machine**
Magazineinheit für Kapseln mit einem Halter für diese Magazineinheit, insbesondere für eine Espressokaffeemaschine
Unité de magasins à cartouches avec un support pour cette unité de magasins, en particulier pour une machine à café espresso

(30) Priority: 13.02.2003 DE 20302410 U
(43) Date of publication of application: 18.08.2004
(73) Proprietor: NESTEC S.A., 1800 Vevey (CH)
(72) Inventor: Fischer, Daniel, 8590 Romanshorn (CH)
(74) Representative: Borne, Patrice Daniel

(56) References cited:
- WO-A-02/078499
- DE-U- 20 015 903
- DE-U- 20 121 494
- US-B1- 6 240 832

## Description

The invention relates to a capsule magazine unit having a holding device for the capsule magazine unit, into which the capsule magazine unit can be releasably inserted, in particular of an espresso machine.

Capsule magazine units of this type are already known, for instance in DE 200 159 03 U1, in order to keep capsules having the substance which is to be prepared, in particular different types of espresso coffee, ready in an organized and easily selectable manner. Accordingly, a plurality of capsule magazine tubes can be arranged in the shape of a circular ring or else in a linear row as the capsule magazine unit. The capsule magazine unit is preferably a releasable part of an espresso machine, but may also be formed separately from the latter. The capsule magazine unit can be removed from the holding device for the capsule magazine unit for convenient fitting with the different coffee capsules and can then be re-inserted into it. Each capsule magazine tube which is part of the capsule magazine unit has a lower capsule removal opening which is arranged laterally or radially outwards if the capsule magazine tubes are arranged in a circle. The lowermost capsule can be removed in each case manually from this capsule removal opening or - preferably if the holding device for the capsule magazine unit is integrated in an espresso machine - can be pushed out of the capsule removal opening by mechanical means in order to convey it into a brewing position to prepare the espresso.

Although the capsule magazine units have made great progress in the simple and reliable preparation of drinks, in particular the preparation of espresso, it can be perceived as being a drawback that, when the capsule magazine unit has been removed from the holding device for the capsule magazine unit, in particular of an espresso machine, the capsules may unintentionally slide out of the removal openings of the magazine tubes, in particular if the capsule magazine unit is tilted.

The present invention is based on the object of therefore developing a capsule magazine unit of the generic type mentioned at the beginning with the effect that the sliding of capsules out of the capsule magazine tubes of the capsule magazine unit which has been removed from the holding device for the capsule magazine unit is reliably avoided without complicating the handling. The technical means in order to achieve this are to be uncomplicated in terms of design.

This object is achieved by the invention specified in Claims 1 and 2.

The features according to the invention are furthermore revealed in detail in Claim 3.

In both variants of the invention, a locking ring is essential in order to prevent coffee capsules from falling out of the lateral capsule removal openings of the capsule magazine unit, the said locking ring, if the capsule magazine tubes are orientated vertically (as is customary), therefore likewise being displaceable vertically in the direction of these tubes. In a lower locking position, into which it automatically slides as a consequence of gravity if the capsule magazine unit has been removed from the holding device for the capsule magazine unit, the said locking ring covers the capsule removal openings of the capsule magazine tubes to an extent sufficient for them no longer to be able to fall out of the capsule removal opening. The essential means furthermore include at least one locking-ring lifting element which is designed in particular as a simple lug.

When the capsule magazine unit - as a rule filled with coffee capsules - is inserted into the holding device for the capsule magazine unit, the locking-ring lifting element causes the locking ring to be blocked relative to the sliding-down capsule magazine unit, which means that it reaches an upper release position in relation to the capsule removal opening, so that a lower capsule for preparing drinks can be removed in each case from the capsule removal opening.

Special handling of the locking ring is therefore not required. On the contrary, its locking or retaining function for the separated capsule magazine unit occurs automatically, as does the release of the capsule removal openings when the capsule magazine unit is introduced into the holding device for the capsule magazine unit.

The shape of the locking ring is in principle as desired and is matched to the arrangement of the magazine tubes, so that their capsule removal openings can be essentially covered in the lower locking position of the locking ring and, on the other hand, the locking ring can be displaced along the capsule magazine tubes.

In the case of a particularly expedient, circular arrangement of the capsule magazine tubes, the locking ring is simply of circular-ring-shaped design. For guidance purposes during the vertical displacement with respect to the capsule magazine tubes, the said locking ring needs merely to rest linearly on the said tubes. The friction during displacement is therefore small.

The device is also uncomplicated because the locking-ring lifting element can be at least one simple, passive element which, in particular according to Claim 5, is a lug protruding inwards on the capsule magazine unit opening of the holding device for the capsule magazine unit. In the second variant according to Claims 2 and 7, the locking-ring lifting element is integrated in the locking ring, for example as a lug which projects outwards from the locking ring or as an outer collar or by dimensioning the external diameter of the locking ring in relation to the capsule magazine unit opening in the holding device for the capsule magazine unit.

More specifically, the first variant of the capsule magazine unit according to Claim 5 has the features of the capsule magazine unit having a base on which the locking ring rests when the capsule magazine unit has been removed from the holding device for the capsule magazine unit, of at least one lug protruding essentially inwards into the holding device for the capsule magazine unit as the locking-ring lifting element on which the locking ring rests when the capsule magazine unit has been inserted into the holding device for the capsule magazine unit, and of the base of the capsule magazine unit having at least one outwardly open slot through which the lug of the holding device for the capsule magazine unit can pass when the capsule magazine unit is pulled vertically out of the holding device for the capsule magazine unit. In this case, the base of the capsule magazine unit delimits the lower locking position into which the locking ring normally wants to move. In contrast, its release position is only reached if the capsule magazine unit is inserted into the holding device for the capsule magazine unit and is lowered onto the lug. In this case, the locking ring is held above the capsule removal openings on the lug of the magazine holding device.

Although, in principle, one lug is sufficient for holding back and supporting the locking ring, the arrangement of at least two, preferably more lugs at a distance from one another is advantageous, so that the locking ring resting on them does not tilt. Coordinated with them, according to Claim 6, are a plurality of slots offset at a distance around the circumference of the base from the base of the capsule magazine unit, which base is round to give a circular arrangement of a plurality of capsule magazine tubes, so that the base can be lowered past the lugs. In particular, the slots are arranged in the base in such a manner that, in every possible operational capsule removal position of the capsule magazine unit, the latter can be pulled out without rotation in the holding device for the capsule magazine unit, by corresponding slots being vertically aligned with all of the lugs.

In contrast, in the second variant of the invention according to Claims 2 and 7, slots in the base are not required and lugs on the locking ring can be arranged freely along the outer circumference thereof without obstructing the removal of the capsule magazine unit from the holding device for the capsule magazine unit.

In addition, in both variants, the capsule magazine unit according to Claim 8 can have, at a vertical distance above the capsule removal openings, an upper stop which upwardly secures the locking ring against sliding out of the capsule magazine unit. The stop can comprise a circular-ring-shaped collar of the capsule magazine unit at a sufficient distance above the capsule removal openings.

A respective exemplary embodiment of both variants of the invention will be explained below with reference to a drawing having five figures, in which:
- Figure 1: shows a side view of a capsule magazine unit of the first variant, which unit is designed as a rotary magazine,
- Figure 2: shows the capsule magazine unit according to Figure 1, but when it is inserted into a holding device for the capsule magazine unit, as part of an espresso machine body,
- Figure 3: shows a plan view of the capsule magazine unit when detached from the holding device for the capsule magazine unit according to Figure 1,
- Figure 4: shows a capsule magazine unit of the second variant when inserted into the holding device for the capsule magazine unit, and
- Figure 5: shows the capsule magazine unit according to Figure 4 when detached, in a plan view.

In both variants, corresponding features are provided with the same reference numbers.

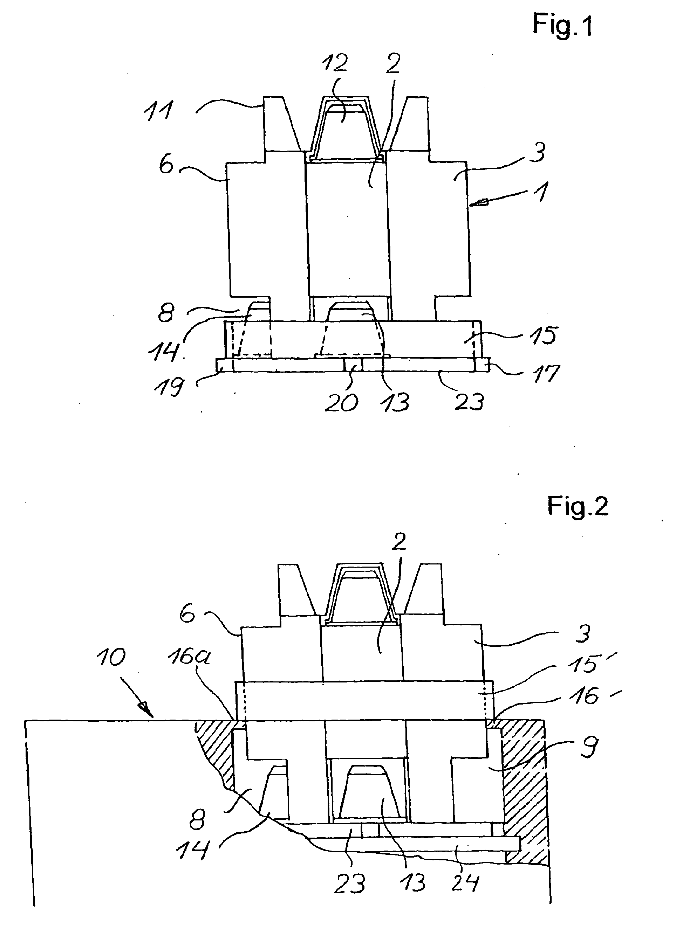

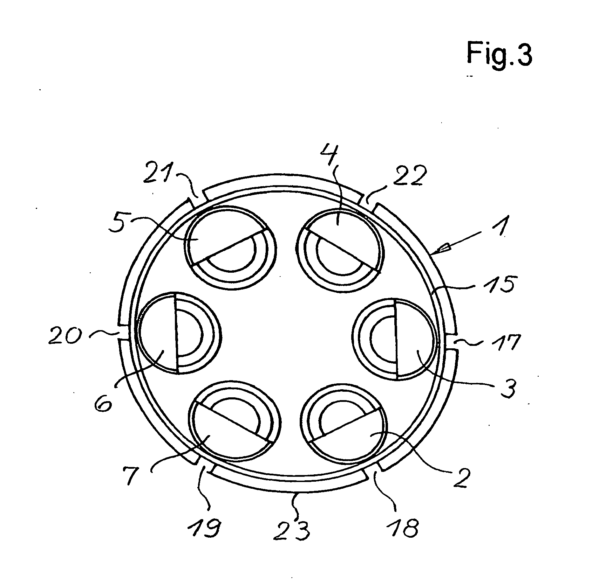

The capsule magazine unit referred to in general by 1 in Figures 1 and 3 comprises six essentially cylindrical capsule magazine tubes which are vertical in the operational position and are fitted in a circular arrangement on a round base 23.

Each capsule magazine tube, e.g. 6, has a capsule removal opening, e.g. 8, at the bottom above the base 23, the said opening being directed radially outwards with respect to a main axis (not shown) of the capsule magazine unit, so that the respectively lowermost of the coffee capsules stacked in the capsule magazine tube can be pushed out of the capsule magazine tube 6 at the capsule removal opening 8. For this purpose, in the present exemplary embodiment, since the capsule magazine unit 1 can be inserted in the operational position into a holding device 9 for the capsule magazine unit as part of an espresso machine body 10, use is made of mechanical means (not illustrated in the drawing) which automatically remove the coffee capsule from a capsule magazine tube, which is rotated into a removal position, and convey this coffee capsule to a brewing position.

In order to fill the capsule magazine unit with coffee capsules of certain types of espresso coffee, which capsules are sorted for the different capsule magazine tubes 2 to 7, the capsule magazine unit is removed preferably from the holding device 9 for the capsule magazine unit, or from the espresso machine body 10 in order to be filled away from it. For this purpose, the coffee capsules are introduced into insertion mechanisms, e.g. 11, formed at the top of the capsule magazine tubes, and are stacked in the capsule magazine tubes. The insertion mechanisms are matched for this purpose to the essentially truncated-cylinder shape of the coffee capsules, so that the coffee capsules can be stacked only in the desired orientation with the base downwards. The coffee capsules which can be seen in Figures 1 and 2 are referred to by 12 to 14. The capsule magazine unit 1 is preferably filled with coffee capsules only to an extent such that it is not possible for any coffee capsule, such as here the coffee capsule 12, to slide laterally counter to the insertion direction out of the insertion mechanism.

In order to avoid an undesirable sliding of the lower coffee capsules, e.g. 12, 13, out of the capsule removal openings, e.g. 8, if the detached capsule magazine unit 1 is held at an inclination, a circular-ring-shaped, vertically displaceable locking ring 15 is provided around the capsule magazine unit. The internal diameter of the locking ring is of sufficient size that the locking ring bears in a slideable manner against outer surface lines of the capsule magazine tubes 2 to 7. It is therefore guided by the capsule magazine tubes 2 to 7. Particularly if the locking ring has a smaller vertical extent than the height of the capsule removal openings 8, additional guide means (which are not shown in the drawing) may be provided in the region of the capsule removal openings.

In the lower locking position of the locking ring 15, which position is illustrated in Figure 1 and may also be referred to as the retaining position since the coffee capsules, e.g. 13, 14, are held back in it against sliding out of the magazine tubes, the locking ring 15 rests on the base 23 of the capsule magazine unit. Without further actuating means, it is able to slide downwards onto the base only by means of gravity.

Without special manual actuation, the locking ring 15 passes from the lower locking position into an upper release position with respect to the capsule removal openings 8 by the capsule magazine unit 1 simply being introduced correctly from above into the holding device 9 for the capsule magazine unit, as illustrated in Figure 2, in which the locking ring is in the release position. It is held in the release position by locking-ring lifting elements 16, 16a which are orientated inwards towards the vertical main axis (not illustrated) of the holding device 9 for the capsule magazine unit or of the capsule magazine unit 1 inserted therein. The locking-ring lifting elements are arranged at equal distances in the circumferential direction of an upper holding opening (not designated) of the holding device 9 for the capsule magazine unit and are therefore suitable for holding the locking ring 15 in an untilted manner.

The arrangement of slots 17 to 22 on the edge of the base 23 is matched, according to Figure 3, to the configuration of the locking-ring lifting elements. In detail, the slots are shaped from the base in such a manner that they permit the base to pass by the locking-ring lifting elements, e.g. 15, 16, when the capsule magazine unit 1 is inserted into the holding device 9 for the capsule magazine unit or is removed therefrom, specifically by a simple vertical movement during removal from any possible operational capsule removal position or latching position of the capsule magazine unit.

Not illustrated on the capsule magazine unit 1 is an upper stop which prevents the locking ring 15 from unintentionally sliding out upwards over the capsule magazine tubes 2 to 7, so that the locking ring cannot be lost.

In Figure 2, the base 23 of the capsule magazine unit 1 rests on a base support 24 in the espresso machine body 10, which support can be designed as a revolving magazine drawer and as such is described, for example, in PCT/EP 02/03281 by the applicant.

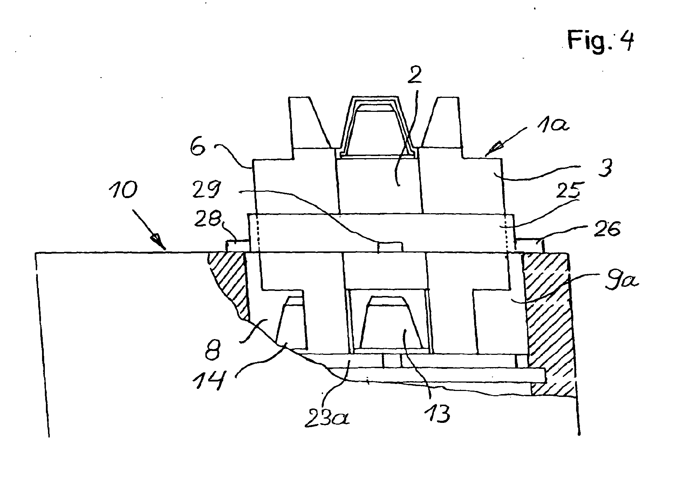

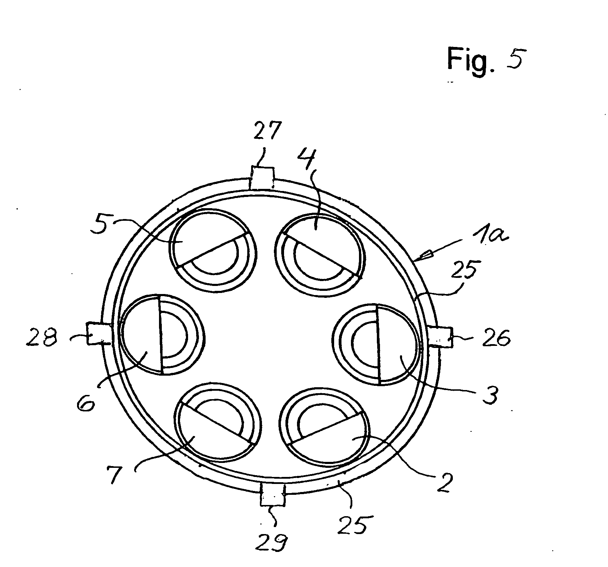

The embodiment of the second variant according to Figures 4 and 5 is distinguished by the fact that the locking-ring lifting elements 26-29 protrude from the outer edge of the locking ring 25, specifically the four locking-ring lifting elements, which are designed as lugs, protrude here uniformly over the circumference without being allocated to a capsule removal position or latching position of the capsule magazine unit 1a.

Its base 23a does not have to be outwardly slit here, since the removal of the capsule magazine unit cannot be obstructed by the locking-ring lifting elements 26-29. The latter rest, in Fig. 4, on the edge of the capsule magazine removal opening (not designated) and, during removal of the capsule magazine unit 1a, are lifted together with the locking ring 23a by means of the base 23a coming into contact with them.

### Reference numbers

- 1, 1a: capsule magazine unit
- 2-7: capsule magazine tube
- 8: capsule removal opening
- 9, 9a: holding device for the capsule magazine unit
- 10: espresso machine body
- 11: capsule-magazine insertion mechanism
- 12-14: coffee capsule
- 15: locking ring (first embodiment)
- 16, 16a: locking-ring lifting element (lug, first embodiment)
- 17: slot
- 18: slot
- 19: slot
- 20: slot
- 21: slot
- 22: slot
- 23, 23a: base
- 24: base support
- 25: locking ring (second embodiment)
- 26: locking-ring lifting element (lug, second embodiment)
- 27: locking-ring lifting element (lug, second embodiment)
- 28: locking-ring lifting element (lug, second embodiment)
- 29: locking-ring lifting element (lug, second embodiment)

## Claims

1. Capsule magazine unit having a holding device (9) for the capsule magazine unit, into which the capsule magazine unit (1) can be releasably inserted, in particular of an espresso machine, the capsule magazine unit (1) comprising at least one essentially vertical capsule magazine tube (2 to 7) which is suitable for holding coffee capsules (12 to 14) stacked one above another and has a lateral capsule removal opening (8) at the bottom, **characterized by** a locking ring (15) which is arranged around the capsule magazine unit (1) and can be displaced essentially vertically with respect to the capsule magazine unit (1), and by at least one locking-ring lifting element (16, 16a) on the holding device (9) for the capsule magazine unit, the said lifting element being suitable for acting on the locking ring (15).

2. Capsule magazine unit having a holding device (9a) for the capsule magazine unit, into which the capsule magazine unit (1a) can be releasably inserted, in particular of an espresso machine, the capsule magazine unit (1a) comprising at least one essentially vertical capsule magazine tube (2 to 7) which is suitable for holding coffee capsules (12 to 14) stacked one above another and has a lateral capsule removal opening (8) at the bottom, **characterized by** a locking ring (25) which is arranged around the capsule magazine unit (1a) and can be displaced essentially vertically with respect to the capsule magazine unit (1a) and has at least one locking-ring lifting element (26-29) which protrudes outwards from the locking ring (25) and is suitable for acting on the holding device (9a) for the capsule magazine unit.

3. Capsule magazine unit according to Claim 1 or 2, **characterized in that** the locking ring (15, 25) can be displaced with respect to the capsule magazine unit (1, 1a) in such a manner that, when the capsule magazine unit (1, 1a) has been removed from the holding device (9, 9a) for the capsule magazine unit, the said locking ring essentially covers the capsule removal opening (8) in a lower locking position, and, when the capsule magazine unit (1) has been inserted into the holding device (9, 9a) for the capsule magazine unit, the said locking ring is held in an upper release position by the locking-ring lifting element (16, 16a; 26-29), so that the capsule removal opening (8) is released.

4. Capsule magazine unit according to at least one of Claims 1 to 3, **characterized by** a circular arrangement of a plurality of capsule magazine tubes (2 to 7), the capsule removal openings (8) of which are open radially outwards with respect to the arrangement, and by an essentially circular-ring-shaped locking ring (15; 25) which surrounds the arrangement and can be displaced.

5. Capsule magazine unit according to at least one of the preceding claims, **characterized in that** the capsule magazine unit (1) has a base (23) on which the locking ring (15) rests when the capsule magazine unit (1) has been removed from the holding device (9) for the capsule magazine unit, **in that** at least one lug protrudes inwards into a capsule magazine unit opening of the holding device (9) for the capsule magazine unit as the locking-ring lifting element (16, 16a) on which the locking ring (15) rests when the capsule magazine unit has been inserted into the holding device (9) for the capsule magazine unit, and **in that** the base of the capsule magazine unit (1) has at least one outwardly open slot (17 to 22) through which the lug of the holding device (9) for the capsule magazine unit can pass when the capsule magazine unit (1) is pulled out of the holding device (9) for the capsule magazine unit.

6. Capsule magazine unit according to Claim 5, **characterized in that** the base (23) of the capsule magazine unit (1) is round, **in that** it has a plurality of slots (17 to 22) offset at a distance around the circumference of the base (23), and **in that** the holding device (9) for the capsule magazine unit has at least two, preferably more, lugs which protrude inwards at a mutual distance and to which the arrangement of the slots (17 to 22) in the base (23) is matched.

7. Capsule magazine unit according to at least one of Claims 2 to 4, **characterized in that** the capsule magazine unit (1a) has a base (23a) on which the locking ring (25) rests when the capsule magazine unit (1a) has been removed from the holding device (9a) for the capsule magazine unit, **in that** a capsule magazine unit opening of the holding device (9a) for the capsule magazine unit is dimensioned to be just large enough for at least the locking-ring lifting element (26-29) to rest on the capsule magazine unit opening when the capsule magazine unit (1a) has been inserted into the holding device (9a) for the capsule magazine unit.

8. Capsule magazine unit according to at least one of the preceding claims, **characterized in that** it has, at a vertical distance above the capsule removal openings, an upper stop which secures the locking ring against sliding out of the capsule magazine unit.

## Patentansprüche

1. Kapselmagazinteil, das eine Haltevorrichtung (9) für das Kapselmagazinteil hat, in die das Kapselmagazinteil (1) lösbar eingesetzt werden kann, insbesondere von einer Espressomaschine, wobei das Kapselmagazinteil (1) mindestens ein im wesentlichen vertikales Kapselmagazinrohr (2 bis 7) aufweist, das zum Halten von aufeinandergestapelten Kaffeekapseln (12 bis 14) geeignet ist und eine seitliche Kapselentfernungsöffnung (8) am Boden hat, **gekennzeichnet durch** einen Sperring (15), der um das Kapselmagazinteil (1) herum angeordnet ist und im wesentlichen vertikal bezüglich des Kapselmagazinteils (1) verschoben werden kann, und **durch** mindestens ein Sperringhebeelement (16, 16a) an der Haltevorrichtung (9) für das Kapselmagazinteil, wobei das Hebeelement zum Einwirken auf den Sperring (15) geeignet ist.

2. Kapselmagazinteil, das eine Haltevorrichtung (9a) für das Kapselmagazinteil hat, in die das Kapselmagazinteil (1a) lösbar eingesetzt werden kann, insbesondere von einer Espressomaschine, wobei das Kapselmagazinteil (1a) mindestens ein im wesentlichen vertikales Kapselmagazinrohr (2 bis 7) aufweist, das zum Halten von aufeinandergestapelten Kaffeekapseln (12 bis 14) geeignet ist und eine seitliche Kapselentfernungsöffnung (8) am Boden hat, **gekennzeichnet durch** einen Sperring (25), der um das Kapselmagazinteil (1a) herum angeordnet ist und im wesentlichen vertikal bezüglich des Kapselmagazinteils (1a) verschoben werden kann und mindestens ein Sperringhebeelement (26 bis 29) hat, das von dem Sperring (25) nach außen wegragt und zum Einwirken auf die Haltevorrichtung (9a) des Kapselmagazinteils geeignet ist.

3. Kapselmagazinteil nach Anspruch 1 oder 2, **dadurch gekennzeichnet, daß** der Sperring (15, 25) bezüglich des Kapselmagazinteils (1, 1a) derart verschoben werden kann, daß wenn das Kapselmagazinteil (1, 1a) aus der Haltevorrichtung (9, 9a) für das Kapselmagazinteil entfernt worden ist, der Sperring die Kapselentfernungsöffnung (8) in einer unteren Sperrstellung im wesentlichen abdeckt, und wenn das Kapselmagazinteil (1) in die Haltevorrichtung (9, 9a) für das Kapselmagazinteil eingesetzt worden ist, der Sperring in einer oberen Freigabestellung von dem Sperringhebeelement (16, 16a; 26 bis 29) gehalten wird, so daß die Kapselentfernungsöffnung (8) freigegeben ist.

4. Kapselmagazinteil nach mindestens einem der Ansprüche 1 bis 3, **gekennzeichnet durch** eine kreisförmige Anordnung einer Anzahl von Kapselmagazinrohren (2 bis 7), von denen die Kapselentfernungsöffnungen (8) radial nach außen bezüglich der Anordnung offen sind, und **durch** einen im wesentlichen kreisringförmigen Sperring (15; 25), der die Anordnung umgibt und verschoben werden kann.

5. Kapselmagazinteil nach mindestens einem der vorhergehenden Ansprüche, **dadurch gekennzeichnet, daß** das Kapselmagazinteil (1) ein Unterteil (23) hat, auf dem der Sperring (15) sitzt, wenn das Kapselmagazinteil (1) aus der Haltevorrichtung (9) für das Kapselmagazinteil entfernt worden ist, **dadurch daß** mindestens eine Nase nach innen in eine Kapselmagazinteilöffnung der Haltevorrichtung (9) für das Kapselmagazinteil als das Sperringhebeelement (16, 16a) ragt, auf dem der Sperring (15) sitzt, wenn das Kapselmagazinteil in die Haltevorrichtung (9) für das Kapselmagazinteil eingeführt worden ist, und **daß** das Unterteil des Kapselmagazinteils (1) mindestens einen nach außen offenen Schlitz (17 bis 22) hat, durch den das Kapselmagazinteil hindurchgehen kann, wenn das Kapselmagazinteil (1) aus der Haltevorrichtung (9) für das Kapselmagazinteil herausgezogen wird.

6. Kapselmagazinteil nach Anspruch 5, **dadurch gekennzeichnet, daß** das Unterteil (23) des Kapselmagazinteils (1) rund ist, **dadurch daß** es eine Vielzahl von Schlitzen (17 bis 22) hat, die in einem Abstand um den Umfang des Unterteils (23) herum versetzt sind, und **daß** die Haltevorrichtung (9) für das Kapselmagazinteil mindestens zwei, vorzugsweise mehr, Nasen hat, die in einem gegenseitigen Abstand nach innen ragen und an die die Anordnung der Schlitze (17 bis 22) in dem Unterteil (23) angepaßt ist.

7. Kapselmagazinteil nach mindestens einem der Ansprüche 2 bis 4, **dadurch gekennzeichnet, daß** das Kapselmagazinteil (1a) ein Unterteil (23a) hat, auf dem der Sperring (25) sitzt, wenn das Kapselmagazinteil (1a) aus der Haltevorrichtung (9a) für das Kapselmagazinteil entfernt worden ist, **dadurch daß** eine Kapselmagazinteilöffnung der Haltevorrichtung (9a) für das Kapselmagazinteil so bemessen ist, daß sie gerade groß genug ist, daß mindestens das Sperringhebeelement (26 bis 29) auf der Kapselmagazinteilöffnung sitzt, wenn das Kapselmagazinteil (1a) in die Haltevorrichtung (9a) für das Kapselmagazinteil eingesetzt worden ist.

8. Kapselmagazinteil nach mindestens einem der vorhergehenden Ansprüche, **dadurch gekennzeichnet, daß** es in einem vertikalen Abstand über den Kapselentfernungsöffnungen einen oberen Anschlag hat, der den Sperring gegen ein Herausgleiten aus dem Kapselmagazinteil sichert.

## Revendications

1. Unité de magasin de capsules comportant un dispositif de retenue (9) pour l'unité de magasin de capsules, dans laquelle l'unité de magasin de capsules (1) peut être insérée de façon amovible, en particulier d'une machine expresso, l'unité de magasin de capsules (1) comprenant au moins un tube de magasin de capsules sensiblement vertical (2 à 7) qui est approprié pour contenir des capsules de café (12 à 14) empilées les unes sur les autres et comporte une ouverture d'enlèvement de capsule latérale (8) à sa base, **caractérisée par** un anneau de verrouillage (15) qui est agencé autour de l'unité de magasin de capsules (1) et peut être déplacé sensiblement verticalement par rapport à l'unité de magasin de capsules (1), et par au moins un élément de soulèvement d'anneau de verrouillage (16, 16a) sur le dispositif de retenue (9) pour l'unité de magasin de capsules, ledit élément de soulèvement étant apte à agir sur l'anneau de verrouillage (15).

2. Unité de magasin de capsules comportant un dispositif de retenue (9a) pour l'unité de magasin de capsules, dans laquelle l'unité de magasin de capsules (1a) peut être insérée de façon amovible, en particulier d'une machine expresso, l'unité de magasin de capsules (1a) comprenant au moins un tube de magasin de capsules sensiblement vertical (2 à 7) qui est approprié pour contenir des capsules de café (12 à 14) empilées les unes sur les autres et comporte une ouverture d'enlèvement de capsule latérale (8) à sa base, **caractérisée par** un anneau de verrouillage (25) qui est agencé autour de l'unité de magasin de capsules (1a) et peut être déplacé sensiblement verticalement par rapport à l'unité de magasin de capsules (1a) et comporte au moins un élément de soulèvement d'anneau de verrouillage (26-29) qui fait saillie vers l'extérieur de l'anneau de verrouillage (25) et est approprié pour agir sur le dispositif de retenue (9a) pour l'unité de magasin de capsules.

3. Unité de magasin de capsules selon la revendication 1 ou 2, **caractérisée en ce que** l'anneau de verrouillage (15, 25) peut être déplacé par rapport à l'unité de magasin de capsules (1, 1a) de manière que, lorsque l'unité de magasin de capsules (1, 1a) a été enlevée du dispositif de retenue (9, 9a) pour l'unité de magasin de capsules, ledit anneau de verrouillage recouvre sensiblement l'ouverture d'enlèvement de capsule (8) dans une position de verrouillage inférieure, et, lorsque l'unité de magasin de capsules (1) a été insérée dans le dispositif de retenue (9, 9a) pour l'unité de magasin de capsules, ledit anneau de verrouillage est retenu dans une position de libération supérieure par l'élément de soulèvement d'anneau de verrouillage (16, 16a ; 26-29), de manière que l'ouverture d'enlèvement de capsule (8) soit dégagée.

4. Unité de magasin de capsules selon au moins une des revendications 1 à 3, **caractérisée par** un agencement circulaire d'une pluralité de tubes de magasin de capsules (2 à 7), dont les ouvertures d'enlèvement de capsule (8) sont ouvertes radialement vers l'extérieur par rapport à l'agencement, et par un anneau de verrouillage en forme de bague sensiblement circulaire (15 ; 25) qui entoure l'agencement et peut être déplacé.

5. Unité de magasin de capsules selon au moins une des revendications précédentes, **caractérisée en ce que** l'unité de magasin de capsules (1) comporte une base (23) sur laquelle l'anneau de verrouillage (15) repose lorsque l'unité de magasin de capsules (1) a été enlevée du dispositif de retenue (9) pour l'unité de magasin de capsules, **en ce qu**'au moins une patte fait saillie vers l'intérieur dans une ouverture d'unité de magasin de capsules du dispositif de retenue (9) pour l'unité de magasin de capsules en tant qu'élément de soulèvement d'anneau de verrouillage (16, 16a) sur lequel l'anneau de verrouillage (15) repose lorsque l'unité de magasin de capsules a été insérée dans le dispositif de retenue (9) pour l'unité de magasin de capsules, et **en ce que** la base de l'unité de magasin de capsules (1) comporte au moins une fente ouverte vers l'extérieur (17 à 22) via laquelle la patte du dispositif de retenue (9) pour l'unité de magasin de capsules peut passer lorsque l'unité de magasin de capsules (1) est tirée hors du dispositif de retenue (9) pour l'unité de magasin de capsules.

6. Unité de magasin de capsules selon la revendication 5, **caractérisée en ce que** la base (23) de l'unité de magasin de capsules (1) est ronde, **en ce qu**'elle comporte une pluralité de fentes (17 à 22) décalées à une distance autour de la circonférence de la base (23), et **en ce que** le dispositif de retenue (9) pour l'unité de magasin de capsules comporte au moins deux, de préférence davantage, pattes qui font saillie vers l'intérieur à une distance mutuelle et auxquelles l'agencement des fentes (17 à 22) dans la base (23) correspond.

7. Unité de magasin de capsules selon au moins l'une des revendications 2 à 4, **caractérisée en ce que** l'unité de magasin de capsules (1a) comporte une base (23a) sur laquelle l'anneau de verrouillage (25) repose lorsque l'unité de magasin de capsules (1a) a été enlevée du dispositif de retenue (9a) pour l'unité de magasin de capsules, **en ce qu'**une ouverture d'unité de magasin de capsules du dispositif de retenue (9a) pour l'unité de magasin de capsules est dimensionnée pour être juste suffisamment grande pour qu'au moins l'élément de soulèvement d'anneau de verrouillage (26-29) repose sur l'ouverture d'unité de magasin de capsules lorsque l'unité de magasin de capsules (1a) a été insérée dans le dispositif de retenue (9a) pour l'unité de magasin de capsules.

8. Unité de magasin de capsules selon au moins l'une des revendications précédentes, **caractérisée en ce qu'**elle comporte, à une distance verticale au-dessus des ouvertures d'enlèvement de capsule, une butée supérieure qui empêche que l'anneau de verrouillage glisse hors de l'unité de magasin de capsules.
